# EUROPEAN PATENT APPLICATION

(11) **EP 4 711 976 A1**
(43) Date of publication of application: **18.03.2026**
(21) Application number: 25201572.2
(22) Date of filing: 11.09.2025
(51) Int. Cl.: G06K 19/07, G06K 19/077

(54) **CONFIGURATION CARD**

(30) Priority: 12.09.2024 CH 10122024
(71) Applicant: Legic Identsystems Ag, 8620 Wetzikon (CH)
(72) Inventor: Faller, Anselm, 85774 Unterföhring (DE); Studerus, Paul, 8165 Oberweningen (CH)
(74) Representative: Rentsch Partner AG

(57) **Abstract**

A configuration card (1) comprises a communication circuit (11) and an antenna (10) connected to the communication circuit (11). The communication circuit (11) is powered by a current induced in the antenna (10) by an electromagnetic field (3) produced by an external device (2). The communication circuit (11) is configured for radio-based wireless exchange of data with the external device (2) via the antenna (10). The configuration card (1) further comprises electromechanical switches (12) configured to set a plurality of more than two switching states. The communication circuit (11) is configured to transmit to the external device (2) a data value depending on a current switching state of the electromechanical switches (12).

## Description

### FIELD OF THE DISCLOSURE

The present disclosure relates to a configuration card. Specifically, the present disclosure relates to a configuration card which comprises a communication circuit and an antenna connected to the communication circuit, the communication circuit being powered by a current induced in the antenna by an electromagnetic field produced by an external device, and the communication circuit being configured for radio-based wireless exchange of data with the external device via the antenna.

### BACKGROUND OF THE DISCLOSURE

Access control systems are known which govern the access of users to facilities such as offices, homes, parking garages, etc. Additionally, access control systems can govern access of users to virtual systems such as computing systems and environments, data, etc.

Access control systems are often provided with one or more access control devices, in particular access control terminals, which may be fixedly installed devices at access control points. Users wishing to gain access must present an identification card. Data is exchanged between the identification card and the access control device to perform an authentication. If the authentication is successful, the user is granted access, for example by the access control terminal unlocking and/or opening an entryway such as a door, gate, turnstile or other barrier.

While earlier generations of identification cards stored data on one or more magnetic strips, such that the card had to be moved through a magnetic strip reader of an access control terminal, newer generations of identification cards use passive RFID technology, in particular NFC, to wirelessly exchange data over a short range of a few centimeters to allow a more seamless access control interaction.

Installing and commissioning access control systems requires that the access control terminals are configured. Known access control terminals therefore typically include one or more user controls, such as push buttons, toggle and slide switches, keypads, touch pads, and dials. Additionally, these access control terminals may include a display to provide, to the user, during configuration, information related to the configuration settings. As a result, access control terminals are provisioned with a display and user controls for configuration which are used rarely (access control terminals are typically configured only once).

### SUMMARY OF THE DISCLOSURE

It is an object of this disclosure to provide a configuration card. In particular, it is an object of the present disclosure to provide a configuration card which does not have at least some of the disadvantages of the prior art.

According to the present disclosure, these objects are addressed by the features of the independent claims. In addition, further advantageous embodiments follow from the dependent claims and the description.

A configuration card comprises a communication circuit and an antenna connected to the communication circuit. The communication circuit is powered by a current induced in the antenna by an electromagnetic field produced by an external device. The communication circuit is configured for radio-based wireless exchange of data with the external device via the antenna.

According to the present disclosure, the above-mentioned objects are particularly achieved in that the configuration card further comprises one or more electromechanical switches configured to set a plurality of more than two switching states, and the communication circuit is configured to transmit to the external device a data value depending on a current switching state of the electromechanical switches.

In an embodiment, the configuration card further comprises a signalling circuit configured to provide a user-perceptible signal related to a connectivity state of the communication circuit with the external device.

The connectivity state relates to one or more of the following states: a field detection state related to the configuration card being in the electromagnetic field generated by the external device; a power connection state related to the power induced in the antenna by the electromagnetic field produced by an external device satisfying a pre-defined minimal power threshold sufficient to power the configuration card; an initialization state indicative of the external device having sent a read request or wake-up signal; an active communication state related to the configuration card and the external device having established a data exchange session including the configuration card having received at least one data request or having sent at least one information request; a data transmission state related to the configuration card transmitting data to the external device; a data reception state related to the configuration card receiving data from the external device; an authentication state indicative of the configuration card having authenticated the external device, or vice-versa, or a termination state related to the external device stopping or shutting off the electromagnetic field.

Alternatively or additionally, the configuration card may be configured to provide the user-perceptible signal related to an energy store state, for example a supercapacitor state and/or a battery state, or a switching state of the electromechanical switches.

In an embodiment, the communication circuit is configured to transmit the data value to the external device in response to a read request received from the external device.

In an embodiment, the configuration card further comprises a display powered by the current induced in the antenna and configured to display data received by the communication circuit from the external device.

In an embodiment, the display may form part of a signaling circuit.

In an embodiment, the display comprises a raster display. The raster display may be implemented as a light emitting raster display or a light reflective raster display.

In an embodiment, the configuration card comprises an additional antenna having a different size than the antenna. The additional antenna may have a substantially circular shape, and the antenna may have a substantially rectangular shape.

In an embodiment, the configuration card comprises an internal energy store and a power management unit, the power management unit configured to power the communication circuit by supplementing the power received by the external device using power drawn from the internal energy store.

In an embodiment, the communication circuit is configured to transmit the data value to the external device in response to a read request received from the external device, and to display on the display a confirmation message received from the external device in response to transmitting the data value to the external device.

In an embodiment, the communication circuit is configured to receive from the external device a prompt message; to display the prompt message on the display; and to transmit to the external device a configuration data value, depending on the current switching state of the electromechanical switches, set subsequently to displaying the prompt message.

In an embodiment, the configuration data value comprises an address for the external device, a volume level for an acoustic converter of the external device, a communication parameter for the external device, a transmission rate for the external device, a duration of a response timeout for the external device, an identification of a communication protocol standard to be supported by the external device, a duration of a wakeup time for the external device, and/or a threshold value for received signal strength at the external device.

In an embodiment, the communication circuit is configured to transmit to the external device an information request message, depending on the current switching state of the electromechanical switches; to receive from the external device an information response message, in response to the information request message; and to display the information response message on the display.

In an embodiment, the information response message comprises an address of the external device, a set volume level for an acoustic converter of the external device, a set communication parameter of the external device, a set transmission rate of the external device, a set duration of a response timeout of the external device, a set identification of a communication protocol standard to be supported by the external device, a set duration of a wakeup time for the external device, or a set threshold value for received signal strength at the external device, an operating status of the external device, an communication indicator indicative of an operational communication connection from the external device with a remote system, a value of a supply voltage of the external device, a battery level of a battery of the external device, an error log of the external device, an access control log of the external device, a software version of software installed at the external device, date information of a performed service of the external device, and/or operational data of the external device.

In an embodiment, the configuration card further comprises an acoustic indicator, and the communication circuit is configured to use the acoustic indicator to indicate a data receipt confirmation received from the external device.

In an embodiment, the configuration card further comprises an optical indicator, configured to indicate a defined power level depending on the current induced in the antenna.

Depending on the embodiment, the communication circuit is configured to perform the wireless data exchange with the external device according to a Radio Frequency Identifier (RFID) protocol, a Near Field Communication (NFC) protocol, an Inter-Integrated Circuit (I2C) protocol, a Serial Peripheral Interface (SPI) protocol, and/or a Universal Asynchronous Receiver-Transmitter (UART) protocol.

Depending on the embodiment, the electromechanical switches comprise one or more of a dual in-line package (DIP) switch, a slide DIP switch, a rocker DIP switch, a piano type DIP switch, a rotary DIP switch, a single in-line package (SIP) switch, or a data entry pad.

### BRIEF DESCRIPTION OF THE DRAWINGS

The present disclosure will be explained in more detail, by way of example, with reference to the drawings in which:
- Figure 1: shows a block diagram illustrating schematically a configuration card with a communication circuit for radio-based wireless data communication via an antenna connected to the communication circuit;
- Figure 2: shows a block diagram illustrating schematically the layout of a configuration card;
- Figure 3: shows a block diagram illustrating schematically the antenna layout of a configuration card according to an embodiment;
- Figure 4: shows a block diagram illustrating schematically the layout of a configuration card;
- Figure 5: shows a block diagram illustrating schematically the components of a communications circuit of a configuration card; and
- Figure 6: shows a flow diagram illustrating exemplary sequences of steps for a configuration card interacting with an external device.

### DETAILED DESCRIPTION OF THE EMBODIMENTS

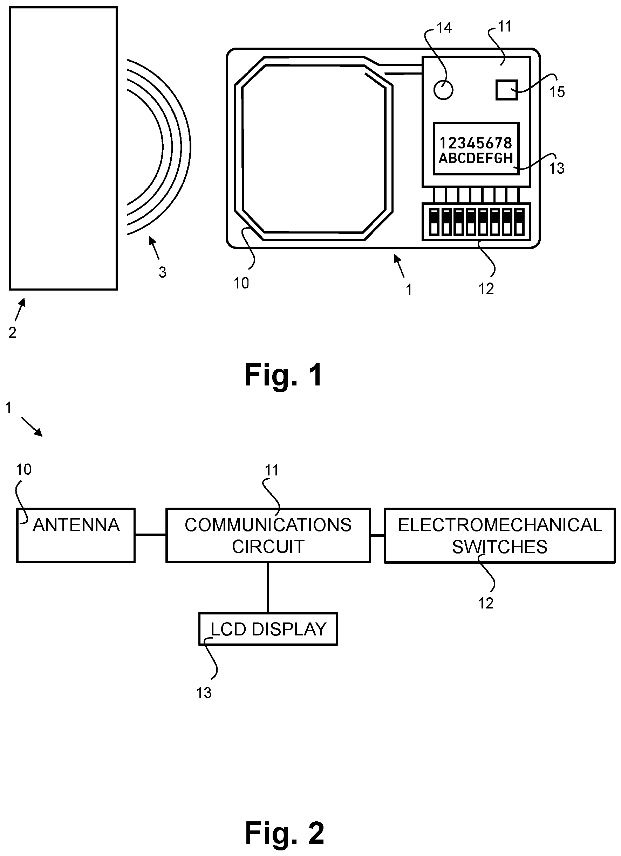

**Figure** 1 shows a configuration card 1. For example, the configuration card 1 has a format with physical dimensions defined in or compatible with the standard ISO/IEC 7810, e.g. an ISO/IEC 7810 ID-1 format typically used for identification and banking cards. The configuration card 1 is in particular a substantially flat device which may have substantially rectangular dimensions. The physical format of the card is beneficial because it allows for the manufacture of the card using known processes and supply chains in the field of banking and identification cards.

As illustrated in Figure 1, the configuration card 1 comprises a communication circuit 11 and an antenna 10 connected to the communication circuit 11. The communication circuit 11 is configured for radio-based wireless exchange of data with an external device 2 via the antenna 10. Depending on the embodiment, the communication circuit 11 is configured to perform the wireless data exchange with the external device 2 according to a Radio Frequency Identifier (RFID) protocol, a Near Field Communication (NFC) protocol, an Inter-Integrated Circuit (I2C) protocol, a Serial Peripheral Interface (SPI) protocol, and/or a Universal Asynchronous Receiver-Transmitter (UART) protocol. The communication circuit 11 is configured to harvest power from an electromagnetic field 3 produced by the external device 2. More specifically, the communication circuit 11 comprises a power harvesting circuit configured to harvest power from a current induced in the antenna 10 by the electromagnetic field 3 produced by the external device 2.

The antenna 10 may be implemented as a planar loop antenna which may have a rectangular spiral shape. The antenna 10 may be compatible with the standard standard ISO/IEC 7810. The antenna 10 comprises metal tracks or traces. The antenna may have multiple loops, for example two to four loops. The antenna 10 preferably has dimensions of between 40 mm to 80 mm on each side. Thereby, the antenna 10 of the configuration card 1 has similar overall dimensions as the antennas of identification cards which may also be used with the external device 2.

The antenna 10 may have dimensions which correspond substantially to the outer dimensions of the configuration card 1 itself, which configuration card 1 may have standard credit card dimensions of 53.98 mm by 85.60 mm.Depending on the embodiment and/or configuration, the external device 2 comprises an access control circuit, an actuator, a lock mechanism, a communication circuit, a power supply, and/or sensor system.

The external device 2 may be implemented as an access control device, for example an access control terminal fixedly mounted to, at or near an entryway to an access controlled area. The entryway may include a door, gate, turn-stile, etc. through which access for a user may be granted and/or denied by the actuator and/or lock mechanism.

As illustrated schematically in Figure 1, the external device 2 is configured to emit an electromagnetic field 3. More specifically, the external device 2 is configured for radio-based communication with the configuration card 1, i.e. for wireless data exchange via the electromagnetic field 3. For example, the external device 2 is configured to perform the wireless data exchange with the configuration card 1 according to a Radio Frequency Identifier (RFID) protocol, a Near Field Communication (NFC) protocol, an Inter-Integrated Circuit (I2C) protocol, a Serial Peripheral Interface (SPI) protocol, and/or a Universal Asynchronous Receiver-Transmitter (UART) protocol.

In an embodiment, the external device 2 does not have a display. The configuration card thereby provides, for the external device 2, a display when brought into communicative range.

In an embodiment, the external device 2 does not have any user controls, for example switches or buttons, for configuring or controlling the external device 2. The configuration card thereby provides, for the external device 2, user controls for configuring the external device 2.

By forgoing a display and/or user controls, the external device 2 may be manufactured in a more compact manner. Additionally, costs of production are lowered due to less components being required.

As further illustrated in Figure 1, the configuration card 1 comprises one or more electromechanical switches 12 configured to set a plurality of more than two switching states. For example, the electromechanical switches 12 comprise one or more of a dual in-line package (DIP) switch, a slide DIP switch, a rocker DIP switch, a piano type DIP switch, a rotary DIP switch, a single in-line package (SIP) switch, and/or a data entry pad. The electromechanical switches 12 are connected to the communication circuit 11. The communication circuit 11 is configured to transmit to the external device 2 a data value depending on the current switching state of the electromechanical switches 12. For example, the data value corresponds to the switching state of the electromechanical switches 12.

For example, the plurality of electromechanical switches 12 are used to encode a binary number. In particular, each of the electromechanical switches 12 may be toggled between two physical states, corresponding to a binary "0" or a binary "1". By setting the plurality of electromechanical switches 12 appropriately, a number may be set by the user. The switching state is then determined by, or corresponds to, the number set. In an example with eight electromechanical switches 12, a number between 0 and 255 may be entered, such that 256 switching states are possible.

As further illustrated in Figure 1, the configuration card 1 comprises a display 13, for example an LCD (Liquid Crystal Display) or LED (Light Emitting Diode) display 13. The display 13 is configured to display alphanumeric information. The display 13 is configured to display data received by the communication circuit 11 from the external device 2.

Reference numeral 14 refers to an optical indicator, e.g. an LED, connected to the communication circuit 11. The communication circuit 11 is configured to use the optical indicator 14 to indicate to a user defined state or operational information, e.g. a defined power level depending on the current induced in the antenna 10.

Reference numeral 15 refers to an acoustic indicator or acoustic transducer, e.g. a micro buzzer, connected to the communication circuit 11. The communication circuit 11 is configured to use the acoustic indicator 15 to indicate to a user-defined state or warning information, e.g. a data receipt confirmation received from the external device 2.

In an embodiment, the configuration card 1 comprises a display 13 arranged on one side of the card 1 and switches 12 arranged on another side of the card 1. In particular, the configuration card 1 has a rectangular shape and is divided into two halves by a virtual line which intersects the midpoint of the long sides of the rectangle, with the display 13 arranged in a first half and the switches 12 arranged in the second half. More specifically, the display 13 has a top side and a bottom side as defined by the way it displays information, in particular alphanumeric data, the halves may be designated as a left half and a right half when the card 1 is arranged in a landscape orientation (in which the long side of the card is horizontal). The display 13 is preferably arranged in the left half and the switches 12 preferably arranged in the right half.

In an embodiment, the configuration card 1 further comprises an integrated energy store. The energy store may comprise a battery. The battery may be removable, for example implemented using a coin-cell battery. The energy store has an energy level depending on its state of charge.

The energy store may additionally or alternatively comprise a supercapacitor module. The supercapacitor module is connected to the antenna and configured to store electrical energy produced by the external device, in one or more supercapacitors, The supercapacitor module may be designed to receive and store the electrical energy.

In an embodiment where the configuration card 1 includes both a battery and a supercapacitor module, the supercapacitor module may be configured to draw power from the battery if, during powering of the one or more components of the configuration card 1, the energy level of the supercapacitors falls below a minimal energy level threshold, which may be defined to be 20% of the maximum energy level.

The configuration card 1 may comprise a power management unit (PMU) which may be integrated into the communication circuit 11, into the supercapacitor module, or arranged as a separate integrated circuit connected to the communication circuit 11 and/or the remaining electronic components of the configuration card 1. The PMU is further operatively connected to the communication circuit 11, electromechanical switches 12, or signaling circuit which comprises the display 13, optical indicator 14 and/or acoustic indicator 15.

The PMU may be configured to power the one or more components of the configuration card 1 only once a defined charging time-period has elapsed after connection with the external device 2 (the defined time-period may be in a range of 2 to 10 seconds), and/or once a defined energy storage level has been reached, for example the supercapacitors have been charged to at least 70% of their maximum energy level.

The PMU may be configured to power the configuration card 1, in particular components thereof such as the communication circuit 11 or the signalling circuit 16, by supplementing the power received from the external device using power drawn from the internal energy store.

In an embodiment, the configuration card 1 is designed to optimize the utilization of electrical energy harvested via the antenna 10 and/or stored in the onboard energy store, such as a supercapacitor module or battery, by selectively supplying power only to those components required for the execution of a specific operational step or function at any given time. The PMU may be configured to control the distribution of electrical power through a plurality of selectively actuable power supply lines or switches, each associated with one or more of the aforementioned components.

Functionally, the PMU operates under the control of a digital control unit or microcontroller, which may be integrated into the communication circuit 11, which executes firmware instructions to determine, based on the current operational context or step, which components are to be activated and supplied with power. For example, during a wireless data exchange with an external device, the PMU may supply power exclusively to the communication circuit 11, while maintaining the signaling circuit 16 (e.g., the display 13) in a powered-down or low-power state. Conversely, when it is necessary to provide user feedback, such as displaying information or emitting an acoustic or optical signal, the PMU selectively energizes the corresponding signaling circuit 16, display 13 or indicator circuits for the minimum duration required to perform the intended function, while powering down in maintaining the communication circuit 11 in a low power state.

The timing and sequencing of power supply to the various components may be governed by a predefined activation sequence, which may include partially or fully overlapping time windows for different components, as dictated by the operational requirements. In embodiments including both a supercapacitor module and a battery, the PMU may further be configured to draw supplemental power from the battery in the event that the energy level of the supercapacitor falls below a predetermined threshold during operation. This selective and context-dependent power management ensures that the overall energy consumption of the configuration card 1 is minimized, thereby enabling reliable operation even when the available power harvested from the antenna is limited.

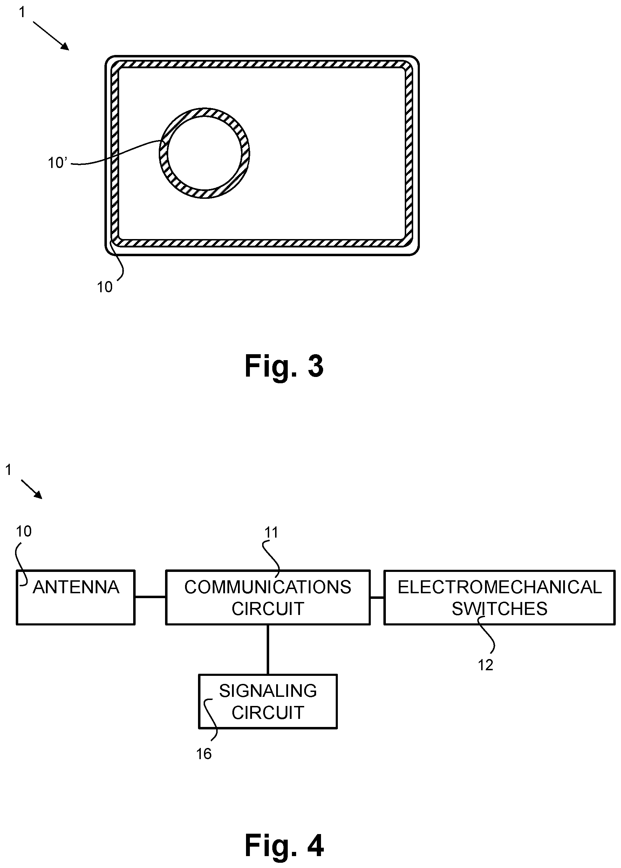

**Figure 2** shows a block diagram illustrating components of the configuration card 1. As shown, the antenna 10 is connected to the communications circuit 11 which is explained in more detail with reference to Figure 3. The communications circuit 11 is connected to the display 13 and the electromechanical switches 12. In particular, the connection includes a power connection and a communication bus, such as a serial communication bus (e.g., according to the I2C standard). Preferably, the components are arranged on a common printed circuit board (PCB) which provides the necessary traces for the electrical connections between the components, in particular the power connection (e.g., supply voltage and ground) and the data bus (e.g., the I2C SCL, which is a serial clock line, and I2C SDA, which is a serial data line).

The configuration card 1 may include intermediary circuit components, for example resistors, capacitors and inductors, as necessary. In particular, the configuration card 1 may include one or more voltage regulators such that components which may require a supply voltage different from that provided by the communications circuit 11.

**Figure 3** shows an embodiment in which the configuration card 1 comprises an antenna 10' which may be implemented as a substantially circular or circular spiral shape having a diameter in the range of 10 mm to 30 mm, in particular 20 mm. The antenna 10' may have multiple loops, for example two to four loops. The smaller circular antenna 10' is suitable for communication with an external device having a correspondingly sized smaller circular antenna. Thereby, the configuration card 1 may be adapted for different sizes of external devices.

In particular, the configuration card comprises two antennas 10, 10' in particular a first antenna 10 having a rectangular shape, in particular as described above with reference to Fig. 1 (e.g., dimensions of between 40 mm to 80 mm on each side) , and a second antenna 10' having a circular shape, in the range of 10 mm to 30 mm, in particular 20 mm. The second antenna 10' is arranged inside the first antenna 10, e.g. a nested antenna. The first antenna 10 thereby encompasses the second antenna 10'. The first and second antennas 10, 10' are preferably arranged in the same structural layer of the configuration card 1, preferably in a layer in which only the antennas 10, 10' and an optional RF interface (not shown) connected to the antennas 10, 10' are arranged.

Thereby, the configuration card 1 is adapted to be compatible with different types of external devices, having differently sized antennas, at the same time. This allows for a single configuration card 1 to be used flexibly.

**Figure 4** shows a block diagram illustrating components of the configuration card 1, with the difference that the configuration card 1 comprises a signaling circuit 16 connected to the communications circuit 11.

The signaling circuit 16 is powered by the current induced in the antenna 10. The signalling circuit 16 is configured to provide a user-perceptible signal. The user-perceptible signal may in particular comprise a visual signal and/or an acoustic signal.

The user-perceptible signal may relate to a connectivity state of the configuration card 1 or, depending on the embodiment, another state of the connectivity card 1.

The signalling circuit 16 may in particular comprise a display as described herein. The display may for example include or be implemented as a raster display which comprises a grid of pixels and may be configured to display data, in particular the data described herein, in the form of symbols such as alphanumeric characters, icons, or graphics.

The display may in particular be implemented as a light emitting raster display, such as an LCD display or OLED display. The display may be implemented as a light reflective raster display, which does not emit light but works on the principle of changing the reflectivity of individual pixels.

The display, in particular the light reflective raster display, may be implemented as a bistable display, in which power is only consumed when the display changes state. These displays, which are often referred to as an electronic paper display, may be implemented using a bistable electrophoretic layer encapsulated between two substrates.

The electrophoretic layer contains microcapsules or microcells filled with positively and negatively charged pigment particles suspended in a dielectric fluid which, on application of an electric field, causes the particles to migrated to the top or bottom of the capsule, rendering the pixel either dark or light.

The display may additionally or alternatively include an LED display comprised of one or more light-emitting diodes (LEDs). The one or more LEDs may include multi-colour LEDs configured to display states of the configuration card, for example, the switching states of the electromechanical switches 12 described herein, a battery state if the configuration card includes a battery, and/or an authentication state, depending on the colour and/or pattern (e.g., including one or more flashing patterns, or a resting light) of the one or more LEDs.

The battery state in particular comprises a low battery state, i.e., if the battery level falls below a defined threshold of, for example, 20%.

The authentication state in particular relates to whether the external device has been authenticated and/or if the external device has authenticated the configuration card. Specifically, as described herein, the configuration card may be configured to generate a challenge message and validate a received response message. The authentication state may relate to the validation of the received response message, in particular identifying whether the response message has been positively validated, indicative that authentication was affirmed, or negatively validated, indicative that authentication was rejected.

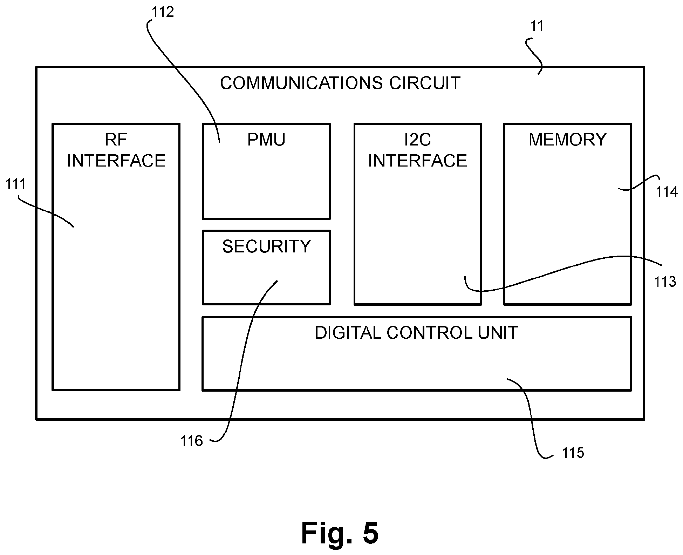

In one example, the LED display comprises a single multi-colour LED which is configured, resp. the signalling circuit 11 and/or the communications circuit 11, are configured such that the LED has the following states: green, in particular upon authentication having been affirmed; red, upon authentication having been rejected; and/or orange, if the battery state is low. Figure 5 shows a block diagram illustrating the communications circuit 11. The communications circuit 11 may be implemented as one or more integrated circuits, preferably packaged into a single chip. As shown, the communications circuit 11 comprises various components and modules which are interconnected with each other.

The communications circuit 11 as shown comprises an RF interface 111 which is connected to the antenna (not shown). The RF interface 111 comprises an RF controller, a passive and/or active load modulation module for transmission and reception of RF signals, and optionally a low power field detection component.

The communications circuit 11 comprises a Power Management Unit (PMU) 112 configured for energy harvesting. Upon application of an RF field to the antenna, the RF field is output to the PMU 112 which distributes the received power both inside the communications circuit 11 and outside the communications circuit 11 (i.e., to other components of the configuration card). In other words, the energy harvested from the electromagnetic field 3 is used to power the communications circuit 11.

The communications circuit 11 comprises an I2C interface 113 for digital communications with other components of the configuration card. The I2C interface comprises, for example, a general purpose input - output interface (GPIO) connected to the electromechanical switches via an optional I/O expander.

The communications circuit 11 comprises a memory 114, which may include EEPROM and/or SDRAM. The memory may store computer program code, for example firmware code and/or application code, as well as data, for example configuration data.

The communications circuit 11 comprises a digital control unit 115. The digital control unit 115 comprises a microprocessor configured such that the communications circuit 11 performs one or more methods, steps and/or functions as described herein. The digital control unit 115 in particular may perform one or more methods, steps and/or functions as described herein at least in part by executing the computer program code stored in the memory 114. The digital control unit 115 may further read and/or write data stored in the memory 114.

The communications circuit 11 further comprises a security module 116. The security module 116 is configured for AES authentication, for example according to the AES128 cryptography suite as defined in ISO/IEC 29167-10. The security module 116 is configured such that it may provide a response to an authentication message. Additionally or alternatively, the security module 116 may be configured to generate a challenge message and validate a received response message.

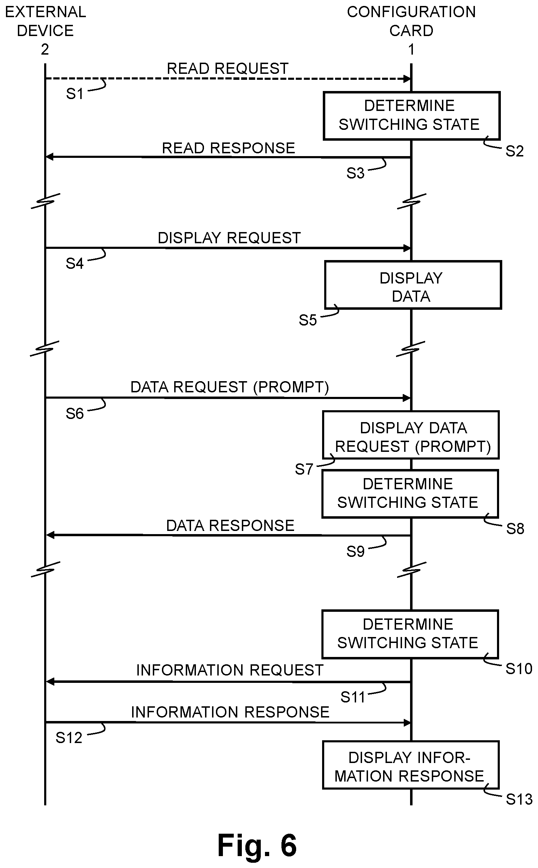

**Figure 6** shows possible sequences of steps performed by the configuration card 1 interacting with the external device 2. The sequences of steps are in particular performed by the communications circuit 11 of the configuration card 1.In optional step S1, the configuration card 1 or its communication circuit 11, respectively, detects or receives a read request from the external device 2.

In step S2, e.g. in response to a detected or received read request, the configuration card 1 or its communication circuit 11, respectively, determines the current switching state of the electromechanical switches 12. For example, the electromechanical switches 12 are set by a user in response to a read request from the external device 2 as indicated by the optical indicator 14 and/or the acoustic indicator 15. In an embodiment, the data value corresponding to the current switching state of the electromechanical switches 12 is displayed on display 13. The data value may be a number defining the switching state. The data value may be a number or other value assigned to, linked or corresponding to the data value. For example, the switching state may define or reference a memory address in the memory assigned to the data value. The switching state therefore may be used to address the data value in the memory.

The data value may include one or more data fields, data types and/or data structures. For example, the data value may comprise one or more strings, floating point numbers, arrays thereof, etc. The data value may be encoded in binary or in a human-readable format. The data value in particular comprises configuration data values for the external device 2.

The current switching state is read, by the communications circuit 11. For example, the digital control unit reads the switching state of the electromechanical switches 12 via an I/O interface, such as the I/O expander and/or a GPIO module of an I2C interface in the communications circuit 11.

In step S3, the configuration card 1 or its communication circuit 11, respectively, transmits to the external device 2 the data value set by the electromechanical switches 12.

Depending on the configuration and/or application, the data value defined by the electromechanical switches 12 and transmitted to the external device 2 comprises one or more configuration data values for the external device 2. For example, the configuration data values comprise an address for the external device 2, a volume level for an acoustic converter of the external device 2, a communication parameter for the external device 2, a transmission rate for the external device 2, a duration of a response timeout for the external device 2, an identification of a communication protocol standard to be supported by the external device 2, a duration of a wakeup time for the external device 2, and/or a threshold value for received signal strength (RSSI) at the external device 2. It is pointed out, that the configuration card 1 and its electromechanical switches 12 make it possible for the external device 2 to receive configuration data from a user, without the external device 2 having to have its own data entry elements.

In Figure 4, the further sequence of steps S4 and S5 relate to displaying data from the external device 2 on the display 13. For that purpose, in step S4, the external device 2 transmits to the configuration card 1 a display request. The configuration card 1 or its communication circuit 11, respectively, receives the display request and, in step S5, displays the information conveyed in the display request on the display 13.

Depending on the configuration and/or application, the information conveyed in the display request comprises operational parameters and data of the external device 2. For example, the information conveyed in the display request comprises an address of the external device 2, a set volume level for an acoustic converter of the external device 2, a set communication parameter of the external device 2, a set transmission rate of the external device 2, a set duration of a response timeout of the external device 2, a set identification of a communication protocol standard to be supported by the external device 2, a set duration of a wakeup time for the external device 2, a set threshold value for received signal strength (RSSI) at the external device 2, an operating status of the external device 2, an communication indicator indicative of an operational communication connection from the external device 2 with a remote system, a value of a supply voltage of the external device 2, a battery level of a battery of the external device 2, an error log of the external device 2, an access control log of the external device 2, a software version of software installed at the external device 2, date information of a performed service of the external device 2, and/or other operational data of the external device 2. It is pointed out, that the configuration card 1 and its display 13 make it possible for the external device 2 to visually convey information to a user, without the external device 2 having to have its own integral display.

In Figure 4, the further sequence of steps S6, S7, S8, and S9 relate to a guided request and response of data for the external device 2, e.g. the configuration outlined above. For that purpose, in step S6, the external device 2 transmits to the configuration card 1 a data request prompt. The configuration card 1 or its communication circuit 11, respectively, receives the data request prompt and, in step S7, displays the data request prompt on the display 13. In step S8, in response to the displayed data request prompt, the configuration card 1 or its communication circuit 11, respectively, determines the current switching state of the electromechanical switches 12. More specifically, the electromechanical switches 12 are set by a user in response to the displayed data request prompt from the external device 2. In step S9, the configuration card 1 or its communication circuit 11, respectively, transmits to the external device 2 the data value set by the electromechanical switches 12, in response to the displayed data request prompt from the external device 2.

In Figure 4, the further sequence of steps S10, S11, S12, and S13 relate to the configuration card 1 requesting information from the external device 2, e.g. the operational parameters and data of the external device 2 outlined above. For that purpose, in step S10, the configuration card 1 or its communication circuit 11, respectively, determines the current switching state of the electromechanical switches 12. In step S11, the configuration card 1 or its communication circuit 11, respectively, transmits to the external device 2 an information request as defined by the current switching state of the electromechanical switches 12. In step S12, responsive to the information request from the configuration card 1, the external device 2 generates and transmits an information response to the configuration card. In step S13, the configuration card 1 or its communication circuit 11, respectively, obtains the information conveyed in the information response from the external device 2 and displays it on the display 13. It is pointed out, that the configuration card 1 and its electromechanical switches 12 and display 13 make it possible for the external device 2 to respond to specific user requests for information and visually convey the requested information to the user, without the external device 2 having to have its own integral data entry elements or display.It should be noted that, in the description, the sequence of the steps has been presented in a specific order, one skilled in the art will understand, however, that the order of at least some of the steps could be altered, without deviating from the scope of the disclosure.

## Claims

1. A configuration card (1) comprising a communication circuit (11) and an antenna (10) connected to the communication circuit (11), the communication circuit (11) being powered by a current induced in the antenna (10) by an electromagnetic field (3) produced by an external device (2), and the communication circuit (11) being configured for radio-based wireless exchange of data with the external device (2) via the antenna (10),
wherein the configuration card (1) further comprises:
one or more electromechanical switches (12) configured to set a plurality of more than two switching states, and the communication circuit (11) is configured to transmit to the external device (2) a data value depending on a current switching state of the electromechanical switches (12); and
a signalling circuit (16) configured to provide a user-perceptible signal related to a connectivity state of the communication circuit (11) with the external device (2).

2. The configuration card (1) of claim 1, wherein the communication circuit (11) is configured to transmit the data value to the external device (2) in response to a read request received from the external device (2).

3. The configuration card (1) of one of claims 1 or 2, wherein the configuration card(1), in particular the signalling circuit (16), further comprises a display (13) powered by the current induced in the antenna (10) and configured to display data received by the communication circuit (11) from the external device (2).

4. The configuration card (1) according to claim 3, wherein the display (13) comprises a raster display, in particular a light emitting raster display or a light reflective raster display.

5. The configuration card (1) according to one of claims 1 to 4, further comprising an additional antenna (10') having a different size than the antenna (10), in particular in which the additional antenna (10') has a substantially circular shape and the antenna (10) has a substantially rectangular shape.

6. The configuration card (1) according to one of claims 1 to 5, further comprising an internal energy store and a power management unit, the power management unit configured to power the communication circuit (11) by supplementing the power received from the external device (2) using power drawn from the internal energy store.

7. The configuration card (1) of one of claims 3 to 6, wherein the communication circuit (11) is configured to transmit the data value to the external device (2) in response to a read request received from the external device (2), and to display on the display (13) a confirmation message received from the external device (2) in response to transmitting the data value to the external device (2).

8. The configuration card (1) of one of claims 3 to 7, wherein the communication circuit (11) is configured to receive from the external device (2) a prompt message; to display the prompt message on the display (13); and to transmit to the external device (2) a configuration data value, depending on the current switching state of the electromechanical switches (12), set subsequently to displaying the prompt message.

9. The configuration card (1) of claim 8, wherein the configuration data value comprises at least one of: an address for the external device (2), a volume level for an acoustic converter of the external device (2), a communication parameter for the external device (2), a transmission rate for the external device (2), a duration of a response timeout for the external device (2), an identification of a communication protocol standard to be supported by the external device (2), a duration of a wakeup time for the external device (2), or a threshold value for received signal strength at the external device (2).

10. The configuration card (1) of one of claims 3 to 9, wherein the communication circuit (11) is configured to transmit to the external device (2) an information request message, depending on the current switching state of the electromechanical switches (12); to receive from the external device (2) an information response message, in response to the information request message; and to display the information response message on the display (13).

11. The configuration card (1) of claim 10, wherein the information response message comprises at least one of: an address of the external device (2), a set volume level for an acoustic converter of the external device (2), a set communication parameter of the external device (2), a set transmission rate of the external device (2), a set duration of a response timeout of the external device (2), a set identification of a communication protocol standard to be supported by the external device (2), a set duration of a wakeup time for the external device (2), a set threshold value for received signal strength at the external device (2), an operating status of the external device (2), an communication indicator indicative of an operational communication connection from the external device (2) with a remote system, a value of a supply voltage of the external device (2), a battery level of a battery of the external device (2), an error log of the external device (2), an access control log of the external device (2), a software version of software installed at the external device (2), date information of a performed service of the external device (2), or operational data of the external device (2).

12. The configuration card (1) of one of claims 1 to 11, wherein the configuration card (1), in particular the signaling circuit (16), further comprises an acoustic indicator (15), and the communication circuit (11) is configured to use the acoustic indicator (15) to indicate a data receipt confirmation received from the external device (2).

13. The configuration card (1) of one of claims 1 to 12, wherein the configuration card (1), in particular the signaling circuit (16) further comprises an optical indicator (14), configured to indicate a defined power level depending on the current induced in the antenna (10) or depending on an energy level in an integrated energy store.

14. The configuration card (1) of one of claims 1 to 13, wherein the communication circuit (11) is configured to perform the wireless data exchange with the external device (2) according to at least one of: a Radio Frequency Identifier (RFID) protocol, a Near Field Communication (NFC) protocol, an Inter-Integrated Circuit (I2C) protocol, a Serial Peripheral Interface (SPI) protocol, or a Universal Asynchronous Receiver-Transmitter (UART) protocol.

15. The configuration card (1) of one of claims 1 to 14, wherein the electromechanical switches (12) comprise one or more of: a dual in-line package (DIP) switch, a slide DIP switch, a rocker DIP switch, a piano type DIP switch, a rotary DIP switch, a single in-line package (SIP) switch, or a data entry pad.
